# FASCICULE DE BREVET EUROPEEN

(11) **EP 4 510 835 B1**
(45) Date de publication et mention de la délivrance du brevet: **06.05.2026**
(21) Numéro de dépôt: 23715148.5
(22) Date de dépôt: 30.03.2023
(51) Int. Cl.: A22C 11/10

(54) **APPAREIL DE MISE EN PORTION DE SAUCISSES AVEC REGLAGE DU CHEVAUCHEMENT DES PINCES DE SERRAGE DU BOYAU A DECOUPER**
WURSTPORTIONIERVORRICHTUNG MIT EINSTELLUNG DER ÜBERLAPPUNG DER KLEMMBACKEN DER ZU SCHNEIDENDEN HÜLLE
SAUSAGE PORTIONING APPARATUS WITH OVERLAP ADJUSTMENT OF THE JAWS CLAMPING THE CASING TO BE CUT

(30) Priorité: 22.04.2022 FR 2203755
(43) Date de publication de la demande: 26.02.2025
(73) Titulaire: System B, 53810 Change (FR)
(72) Inventeur: BEUCHER, Jérémy, 53960 BONCHAMP (FR); DUMAS, Xavier, 35410 CHATEAUGIRON (FR)
(74) Mandataire: Vidon Brevets & Stratégie
(86) Numéro de dépôt international: PCT/EP2023/058241
(87) Numéro de publication internationale: WO 2023/202858

(56) Documents cités:
- EP-A1- 0 109 801
- EP-A1- 3 187 051
- FR-A1- 3 091 803
- GB-A- 696 874
- US-A- 2 663 982

## Description

### 1. Domaine de l'invention

Le domaine de l'invention est celui des équipements manuels pour le milieu agroalimentaire et artisanal.

L'invention concerne un appareil de mise en portion de saucisses à partir d'une saucisse continue qui est découpée par l'appareil en portions égales.

### 2. Art antérieur

Dans le domaine de l'invention, les professionnels disposent d'appareils de mise en portions pour la fabrication de saucisses qui permettent à partir d'une saucisse continue constituée d'un produit alimentaire, tel qu'un hachis de viande ou poisson et/ou légumes, recouvert d'une peau ou enveloppe, de produire des saucisses individuelles.

Ces appareils comprennent généralement au moins une paire de pinces opposées aptes à être déplacées l'une vers l'autre par des moyens d'actionnement d'une position ouverte vers une position fermée afin de pincer le boyau rempli de produits alimentaires. Chaque pince comprend un bord avant de pincement, sensiblement en forme de V. Lors de leur déplacement vers la position fermée, les pinces se chevauchent à la manière d'une cisaille, et forment par leur bord avant un passage pour le boyau (ou diaphragme) dont la section diminue progressivement. Lors du pincement, le boyau est resserré et le produit alimentaire est chassé de chaque côté du point de contraction. Une fois le produit alimentaire chassé, les pinces continuent leurs translations sur quelques millimètres jusqu'à être rapprochées au maximum (la section de passage du boyau entre les pinces étant légèrement supérieure à 0)

A cet endroit, le boyau est coupé exactement à l'endroit du resserrement par une lame associée à la paire de pinces, et la saucisse ainsi coupée tombe dans un bac de collecte.

La solution décrite dans le document de brevet publié sous le numéro EP3187051 consiste à proposer un dispositif dans lequel les bords avant, en forme de V, de chacune des pinces qui entrent en contact avec la saucisse continue pour la pincer, se chevauchent complètement lorsque les pinces sont dans une position de fermeture. Cette solution permet aux pinces d'exercer sur le boyau de la saucisse continue un déplacement transversal à l'axe longitudinal de la saucisse continue afin de l'étirer davantage. Ainsi, lorsque le boyau est coupé, il a alors été préalablement pincé et étiré sur une certaine longueur, de manière à ce qu'il subisse un resserrement destiné à permettre, suite à la coupe du boyau, le maintien du produit alimentaire à l'intérieur du boyau et donc une bonne fermeture des saucisses. Une particularité de cette solution réside dans le fait que la saucisse découpée n'a pas besoin d'être torsadée à ses extrémités ni d'être liée pour éviter que la chair ne s'échappe.

Le boyau souple d'une saucisse continue destinée à être portionnée par un tel appareil peut être un boyau naturel (de porc, de bœuf ou de mouton) ou bien un boyau artificiel (synthétique), tel un boyau végétal. Or, ces différents types de boyaux ne présentent pas la même élasticité et résistance mécanique à la déformation, le boyau de porc par exemple présentant une meilleure résistance à la déchirure qu'un boyau artificiel.

Par ailleurs, la résistance des boyaux à la déformation dépend également de la pression sous laquelle la chair a été embossée dans le boyau et du type de chair contenue dans le boyau.

Le brevet américain US 2,663,982 et la demande de brevet du Royaume Uni GB 696874 décrivent un dispositif de mise en portion de saucisses à partir d'une saucisse continue formée d'un boyau souple contenant de la chair à saucisse. Les dispositifs de mise en portion comprennent un axe central sur lequel est montée une platine rotative autour de laquelle la saucisse continue est destinée à être entraînée. La platine est munie d'une succession de paires de pinces de serrage opposées disposées autour de l'axe central et aptes à êre déplacées l'une vers l'autre en une position d'ouverture et une position de fermeture. En position de fermeture, les pinces se chevauchent et forment un passage de resserrement au travers duquel passe la saucisse continue, le passage de resserrement créant une longueur de boyau entièrement dépourvue de produit alimentaire, de manière à maintenir le produit alimentaire à l'intérieur du boyau une fois ce dernier tranché par un organe de coupe situé au niveau du passage de resserrement. Le déplacement des paires de pinces est assuré par des chemins de came ménagés sur des cames montées chacune sur l'axe central de part et d'autre de la platine. Ces dispositifs comprennent des moyens de réglage de l'amplitude de chevauchement des pièces en position de fermeture, mais il s'agit de vis ou de boulons ne permettant pas la possibilité de modifier la position des chemins de came le long de l'axe de rotation. En outre, ces dispositifs ne comportent pas d'organe de coupe pour chaque paire de pinces.

Il existe donc un réel besoin d'un appareil de mise en portion de saucisses à partir d'une saucisse continue, constituée d'un boyau souple rempli de produit alimentaire, qui assure à la fois une découpe de saucisse selon une longueur calibrée en assurant une bonne fermeture des extrémités afin de maintenir à l'intérieur du boyau le produit alimentaire, et qui est adaptée à la fabrication de saucisses constituées de différents types de boyaux (naturels et synthétiques).

### 3. Exposé de l'invention

En vue de résoudre au moins les problèmes mentionnés précédemment, la présente invention propose donc un dispositif de mise en portion de saucisses à partir d'une saucisse continue formée d'un boyau souple contenant un produit alimentaire, tel que de la chair à saucisse, selon la revendication 1, ledit dispositif comprenant un axe central fixe sur lequel est montée une platine rotative autour de laquelle la saucisse continue est destinée à être entraînée, ladite platine étant munie d'une succession de paires de pinces de serrage opposées disposées autour de l'axe central et d'un organe de coupe pour chaque paire de pinces. Les pinces de chaque paire de pinces sont aptes à être déplacées l'une vers l'autre entre une position d'ouverture et une position de fermeture de sorte que, dans la position de fermeture, les pinces se chevauchent et forment un passage de resserrement au travers duquel passe la saucisse continue, le passage de resserrement étant destiné à créer une longueur de boyau entièrement dépourvue de produit alimentaire, ou quasiment, de sorte à maintenir le produit alimentaire à l'intérieur du boyau une fois le boyau tranché par l'organe de coupe au niveau dudit passage de resserrement. Le déplacement des paires de pinces et de l'organe de coupe associé est assuré par des chemins de came ménagés sur une première et une deuxième cames montées chacune sur l'axe central de part et d'autre de la platine.

Selon l'invention, ledit dispositif comprend des moyens de réglage de la position d'au moins une desdites cames le long de l'axe central parmi plusieurs positions de sorte à pouvoir modifier l'amplitude de chevauchement des pinces en position de fermeture de ces dernières et les dimensions du passage de resserrement.

L'invention propose donc un réglage de la fermeture des pinces opposées constituant chaque paire de pinces de la machine. Ces paires de pinces sont aptes à être déplacées l'une vers l'autre par des moyens d'actionnement d'une position ouverte vers une position fermée afin de pincer le boyau rempli de produits alimentaires dans un passage de resserrement avant que le boyau resserré ne soit coupé.

En sélectionnant le degré ou l'amplitude de chevauchement ou de superposition des pinces de serrage en position de fermeture de ces dernières, il est possible de modifier la géométrie et configuration du passage de resserrement défini entre les pinces de serrage, en fonction de la qualité de fermeture recherchée qui est liée notamment au type de boyau utilisé (boyau naturel ou synthétique).

Pour ce faire, selon une mise en œuvre possible de l'invention, la position sur l'axe central d'une came pilotant le déplacement d'une des deux pinces de chaque paire de pinces peut être réglée permettant ainsi de modifier la fin de course de la pince correspondante, et donc d'ajuster le chevauchement des pinces (la position de l'autre came pilotant le déplacement de l'autre pince de chaque paire de pinces restant fixe sur l'axe central).

Le boyau subit un resserrement qui peut être ajusté selon le type de boyau utilisé et qui persiste lorsqu'il est coupé par la lame associée à la paire de pinces, permettant ainsi de maintenir le produit alimentaire à l'intérieur du boyau une fois ce dernier tranché.

Selon une autre mise en œuvre possible de l'invention, la position des deux cames pilotant le déplacement des pinces peut être réglée pour ajuster le chevauchement des paires de pince de serrage.

Dans l'une ou l'autre de ces mises en œuvre possibles, les deux pinces de chaque paire de pinces sont mobiles en translation et peuvent ainsi être déplacées entre une position d'ouverture et une position de fermeture. Dans une variante, une seule des pinces de chaque paire de pinces est mobile en translation, la position de l'autre pince étant fixe par rapport à la platine.

Selon un aspect particulier de l'invention, dans au moins une position de ladite au moins une desdites cames le long de l'axe central, le chevauchement des pinces est tel que le passage de resserrement est droit et maintient le boyau resserré dans l'axe longitudinal de la saucisse continue.

Selon un autre aspect particulier de l'invention, dans au moins une position de ladite au moins une desdites cames le long de l'axe central, le chevauchement des pinces est tel que le passage de resserrement forme une chicane exerçant sur le boyau un déplacement transversal à l'axe longitudinal de la saucisse continue.

Selon encore un autre aspect particulier de l'invention, ladite au moins une came réglable est montée fixe en rotation et mobile en translation sur l'axe central et les moyens de réglage comprennent des moyens de commande de la translation de ladite au moins une came sur l'axe central entre au moins deux positions de réglage de la came.

Selon un aspect particulier de l'invention, les moyens de commande comprennent un organe de commande solidaire de ladite au moins une came réglable, ledit organe de commande étant monté mobile en rotation et en translation sur l'axe central, le déplacement en rotation et en translation dudit organe de commande sur l'axe central provoquant le déplacement en translation de la came réglable sur l'axe central.

Selon un autre aspect particulier de l'invention, lesdits moyens de commande portent une partie manipulable mobile en rotation entre au moins deux positions angulaires, le déplacement en rotation de la partie manipulable provoquant la translation et la rotation combinées dudit organe de commande.

Selon encore un autre aspect particulier de l'invention, lesdits moyens de commande portent une goupille coopérant avec une rainure hélicoïdale ménagée sur la périphérie de l'axe central.

Selin un aspect particulier de l'invention, la partie manipulable est montée mobile en translation sur l'organe de commande entre une position déverrouillée autorisant la rotation de la partie manipulable entre deux positions de réglage de la came sur l'axe central et une position verrouillée bloquant la partie manipulable dans une position de réglage de la came sur l'axe central.

Selon encore un autre aspect particulier de l'invention, la came réglable présente plusieurs encoches de verrouillage de la partie manipulable correspondant chacune à une position de réglage de la came sur l'axe central.

Selon un aspect de l'invention, l'organe de commande est une pièce cylindrique logée dans une cavité de forme correspondante ménagée dans la came réglable.

Selon un autre aspect particulier de l'invention, l'organe de commande est solidarisé à la came par un téton de liaison.

L'invention présente donc un nouvel appareil et un nouveau procédé de fabrication qui présente la capacité de mettre en portion pour de petites et moyennes cadences, sans un coût trop élevé, différents types de saucisses individuelles dont le produit alimentaire est parfaitement contenu à l'intérieur du boyau.

Cet appareil s'adapte facilement à différents diamètres et types de saucisses continues disponibles sur le marché. Cet appareil dispose de plusieurs réglages permettant notamment de faire varier la déformation du boyau à découper sans déchirer ce dernier et de faire varier la manière dont est chassé le produit dans le boyau de sorte à assurer une bonne fermeture des saucisses, quel que soit le type de boyau utilisé.

### 5. Liste des figures

D'autres caractéristiques et avantages de l'invention apparaîtront plus clairement à la lecture de la description suivante d'un mode de réalisation particulier, donné à titre de simple exemple illustratif et non-limitatif, et des dessins annexés, parmi lesquels :
- [Fig. 1] est une vue de face d'un exemple de réalisation d'un appareil de mise en portion de saucisses à partir d'une saucisse continue,
- [Fig. 2] montre en perspective l'appareil de la figure 1,
- [Fig. 3] est une vue partielle de côté de l'appareil des figures 1 et 2, une seule paire de pinces de serrage et une lame de découpe associée étant montées sur la platine,
- [Fig. 4] est une vue partielle de l'appareil montrant la paire de pinces de serrage en position d'ouverture,
- [Fig. 5] est une vue partielle de l'appareil montrant la paire de pinces de serrage entre la position d'ouverture et la position de fermeture, et en médaillon, le passage de resserrement du boyau entre la paire de pinces,
- [Fig. 6] est une vue partielle de l'appareil montrant la paire de pinces de serrage dans une position de fermeture selon une configuration particulière de l'appareil,
- [Fig. 7] présente en détail la position de la pince et contre-pince dans une position de fermeture selon une configuration particulière de l'appareil, le boyau resserré subissant une découpe par la lame associée,
- [Fig. 8] présente en médaillon et vue de face e la paire de pinces de serrage dans une position de fermeture selon une autre configuration particulière de l'appareil,
- [Fig. 9] est une vue en perspective de la came avant de l'appareil coopérant avec une pince et une lame,
- [Fig. 10] est une autre vue en perspective de la came avant seule,
- [Fig. 11A] présente le loquet de la came avant en position verrouillée et déverrouillée,
- [Fig. 11B] présente le loquet de la came avant en position déverrouillée,
- [Fig. 12] montre en transparence la came avant montée sur l'axe central de l'appareil,
- [Fig. 13] montre en transparence une partie de la came avant et l'axe central de l'appareil,
- [Fig. 14] présente deux vues de l'axe central de l'appareil,
- [Fig. 15A], [Fig. 15B] et [Fig. 15C] présentent trois possibilités de fermeture des paires de pinces.

### 6. Description d'un mode de réalisation de l'invention

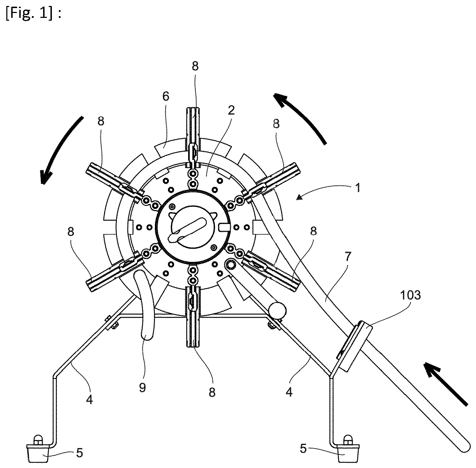

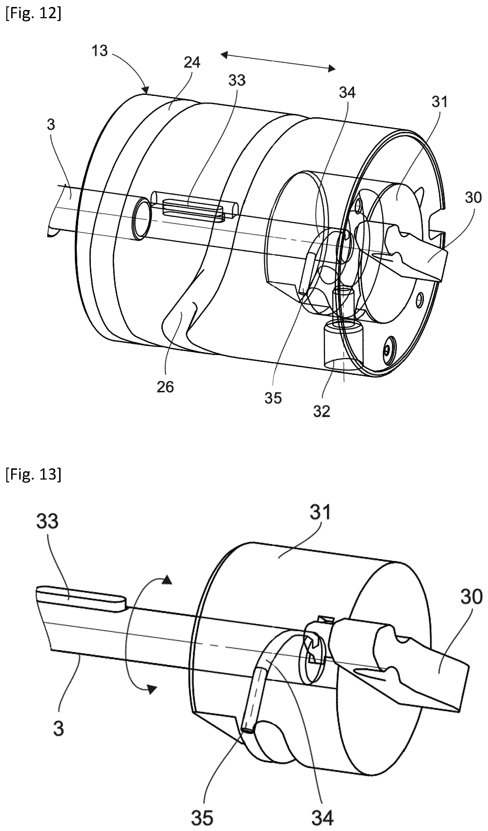

Les **figures 1 à 3** présentent selon différentes vues un exemple de réalisation d'un appareil ou machine de mise en portion de saucisses à partir d'une saucisse continue. L'appareil 1 possède une platine 2 circulaire dont l'axe 13 de rotation (visible sur les figures 13 à 15 ) est monté horizontalement sur un bâti 4 doté de pieds 5. L'appareil 1 reçoit une saucisse continue 7 formée d'un boyau cylindrique dans lequel on a introduit un produit alimentaire, de la chair à saucisse par exemple. Au-dessus d'un des pieds, le bâti 4 présente un anneau de guidage 103 de la saucisse continue 7 vers la platine 2 qui est incliné vers l'extérieur.

L'appareil 1 est muni de plusieurs paires de pinces 8 de serrage, chaque paire étant formée d'une pince 16 et d'une contre-pince 17 dans laquelle est destinée à venir se loger la pince 16. Les paires de pinces 8 de serrage sont destinées à serrer la saucisse continue 7 afin de l'entraîner dans la rotation de la platine 2. La saucisse continue 7 est suffisamment souple pour prendre la forme circulaire imposée par les paires de pinces 8 de serrage. Au cours de cette rotation, le boyau subit un resserrement progressif jusqu'à ce que le produit alimentaire soit chassé de chaque côté du point de contraction. Une fois le produit alimentaire chassé, le boyau est coupé par un organe de coupe, ou lame, 18 placée au niveau de chaque paire de pinces 8 de serrage et la saucisse 9 ainsi coupée tombe dans un bac de collecte (non illustré) disposé entre les deux pieds 5.

Plus précisément, la lame 18 se déplace au travers la pince 16 et la contre-pince 17 pour couper la saucisse continue lorsque ces dernières sont en position de fermeture. De cette manière, la coupure s'effectue dans la zone de pincement, juste après que les chairs aient été chassées de cette zone. Lorsque la pince et la contre-pince s'écartent après la coupure, le boyau étiré de la saucisse coupée maintient parfaitement le produit alimentaire à l'intérieur.

Dans le mode de réalisation décrit, la pince 16 et la contre-pince 17 de chaque paire de pinces 8 de serrage sont montées mobiles sur la platine 2 et sont destinées à se déplacer l'une vers l'autre en translation. De cette manière, le déplacement de la pince 16 et de la contre-pince 17 est plus court et l'opération de serrer le boyau en chassant le produit à l'intérieur s'effectue plus rapidement.

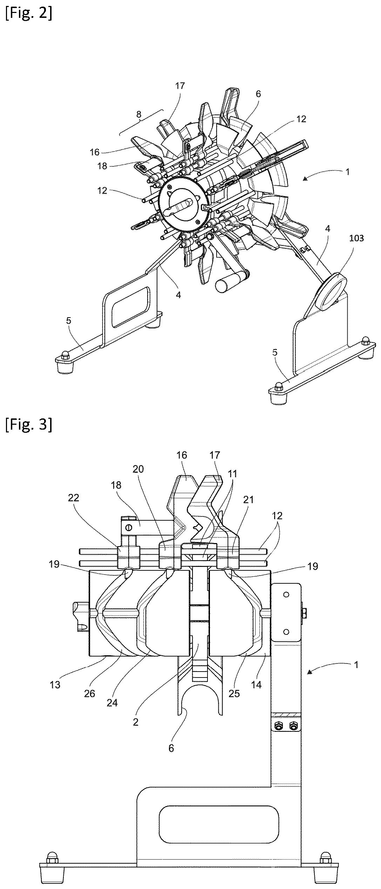

Les paires de pinces 8 de serrage sont animées en translation par deux cames 13, 14 cylindriques réglables (visibles sur la figure 3 notamment) solidarisées à l'axe 3 de l'appareil 1 par clavetage (comme illustré sur la figure 12) de façon qu'elles occupent une position parfaitement fixe par rapport au bâti 4 lors du fonctionnement de la machine, ces cames 13, 14 étant montées de part et d'autre de la platine 2. Comme on le verra par la suite, l'invention prévoit de pouvoir régler la position d'une des cames 13, 14 sur l'axe 3, via des moyens de réglages, de sorte à modifier le chevauchement de la pince 16 et de la contre-pince 17 en position fermée en fonction de la qualité de fermeture désirée qui est liée notamment au type de boyau utilisé (boyau naturel ou synthétique).

Sur la figure 3, les deux cames 13, 14 cylindriques dont les axes se confondent avec l'axe 3 de l'appareil 1 sont constituées d'une came 13 avant qui est placée à l'avant de la platine 2, et d'une came 14 arrière placée à l'arrière de la platine 2.

Dans l'exemple décrit ci-après, la came 13 avant peut être déplacée en translation le long de l'axe 3 du bâti 4 avant l'utilisation de l'appareil 1 de sorte à ce que l'utilisateur puisse régler le degré de chevauchement de la pince 16 et la contre-pince 17 de chaque paire de pinces 8 de serrage comme souligné précédemment.

Ici, la rotation de la platine 2 est provoquée manuellement par un opérateur à l'aide d'une manivelle 10 (illustrée sur la figure 2), évitant ainsi l'utilisation d'un moteur, et simplifiant la fabrication de l'appareil 1. Selon un autre mode de réalisation envisageable, l'appareil 1 peut comprendre un moteur remplaçant la manivelle 10. Un système du type Rouet pourrait également être envisagé.

Comme visible sur la figure 2 et la figure 3, qui sont des vues en perspective et de côté respectivement de l'appareil 1 de mise en portion de saucisses à partir d'une saucisse continue 7, les pinces 16, contre-pinces 17 et lames 18 sont solidarisés sur la platine 2 par des glissières 12 droites et cylindriques passant à travers des orifices 11 ménagés sur la platine 2 et emmanchés serrées dans ces orifices 11, ces glissières 2 dépassant de chaque côté de la platine 2 et étant maintenues parallèles entre elles.

Chaque paire de pinces 8 de serrage et la lame 18 de découpe du boyau associée coulissent sur les glissières 12 par le guidage des deux cames 13, 14 cylindriques. Dans l'exemple décrit ici, pour chaque paire de pinces 8 de serrage, la came avant 13 provoque le déplacement de la pince 16 et de la lame 18, et la came arrière 14 provoque le déplacement de la contre-pince 17.

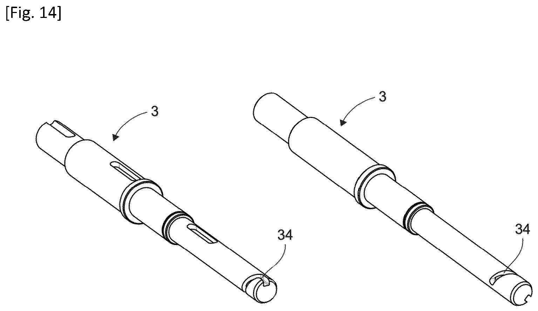

L'axe 3 horizontal de l'appareil 1 qui est fixé en partie supérieure du bâti 5 possède trois sections (comme illustré sur la figure 14). Sa première section reçoit la came avant 13 dont la rotation est bloquée par une première clavette (référencée 33 sur les figures 12 et 13), la seconde section d'un diamètre supérieur sert de palier pour la libre rotation de la platine 2 et une troisième section avec le diamètre le plus important supporte la came arrière 14, qui est elle-aussi bloquée en rotation par une seconde clavette. La platine 2 vient donc se glisser sur la seconde section de l'axe 3 et est libre en rotation. Plus particulièrement, la seconde section permet de bloquer la translation de la platine 2 le long de l'axe 3.

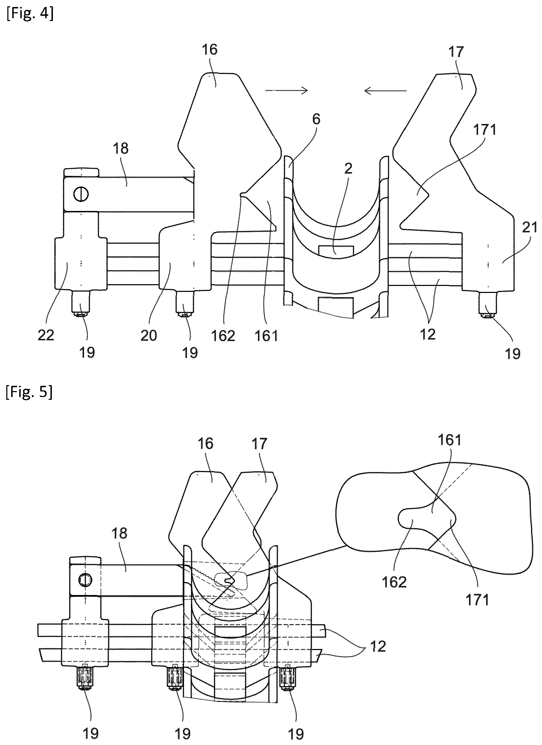

L'appareil 1 de mise en portion dispose en outre d'une gouttière de guidage 6 (visible notamment sur les figures 2 et 4) qui s'étend à partir de la platine 2 autour de cette dernière, et qui reçoit la saucisse continue 7 et la dirige dans son déplacement autour de l'appareil 1.

Nous allons maintenant détailler la cinématique du déplacement de ces éléments en fonction de la rotation de la platine 2 pour une configuration particulière de l'appareil, ce dernier étant adapté pour couper une saucisse continue de façon que les extrémités des saucisses maintiennent le produit alimentaire à l'intérieur, sans nécessité de les torsader.

La figure 4 présente un ensemble fixé sur la platine 2 selon un mode préféré de réalisation qui se compose d'une paire de pinces 8 de serrage et d'une lame 18, et des éléments pour les mouvoir. Plus précisément, une pince 16 et une contre-pince 17 constituant une paire de pinces 8 de serrage sont animées en translation par la rotation de la platine 2 dans un mouvement de va et vient entre une position d'ouverture (illustrée sur cette figure 4) et une position de fermeture. La saucisse continue 7 est ainsi serrée entre les pinces 8 de serrage dans la position de fermeture et tirée par les pinces 8 de serrage pour s'enrouler autour de la platine 2 lors de sa rotation par le biais de la manivelle 10. Lorsque la saucisse continue est complètement serrée par les pinces 8 de serrage, la lame 18, se déplace latéralement et vient s'insérer entre les pinces 16, 17 pour couper le boyau. Pour ce faire, les trois éléments : pince 16, contre-pince 17 et lame 18 sont animés en translation par les deux cames 13, 14 cylindriques : la pince 16 coopérant avec la came avant 13, la contre-pince 17 coopérant avec la came arrière 14, la lame 18 coopérant avec la came avant 13.

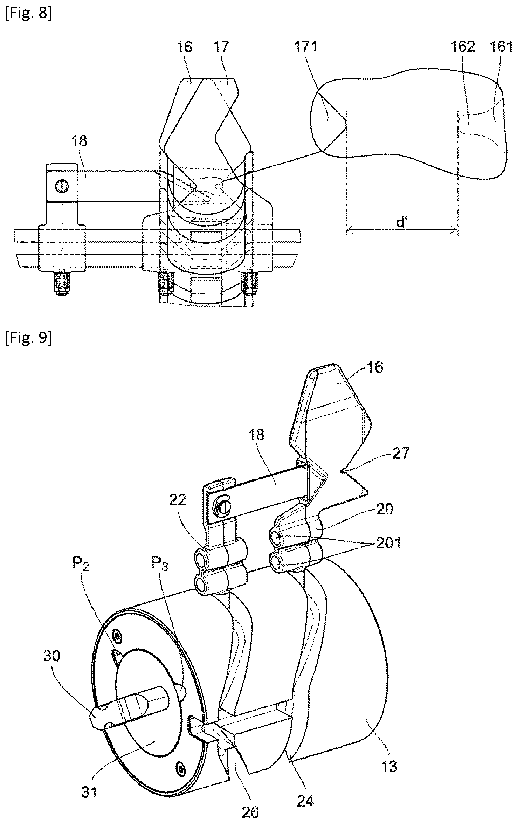

Comme visible sur les figures 4 et 9, la pince 16 possède une embase 20 qui comporte deux trous 201 allongés et sensiblement cylindriques, dont les axes sont parallèles à l'axe 3 de rotation de la platine 2. Les deux glissières 12 s'insèrent dans les trous 201 allongés et la pince 16 coulisse sur ces glissières 12 sans pouvoir pivoter. De même, la contre-pince 17 possède également une embase 21 dotée de deux trous allongés pour recevoir les mêmes glissières 12. Enfin, la lame 18 est aussi montée sur une embase 22 du même type que les deux précédentes. De cette manière, la pince 16, la contre-pince 17 et la lame 18 peuvent coulisser sur les mêmes glissières 12 et se positionnent avec précision les unes par rapport aux autres.

Les deux embases 20, 22 se prolongent dans leur partie orientée vers l'axe 3 de rotation de la platine 2 par deux pions 19 cylindriques qui s'insèrent dans deux rainures 24, 26 pratiquées dans la came 13 avant. L'embase 21 se prolonge également par un pion 19 cylindrique qui s'insère dans une rainure 25 pratiquée dans la came 14 arrière. Les rainures 24, 25, 26 de chaque came 13, 14 possèdent une largeur au moins égale au diamètre du pion 19.

Chaque pion 19 vient s'insérer dans une rainure correspondante pratiquée dans une des deux cames avant 13 et arrière 14.

La **Fig. 3** montre l'appareil 1 de mise en portion doté de deux glissières 12 uniquement. Les deux cames 13 et 14 sont montées de façon fixe sur l'axe 3. La rotation de la platine 2 entraîne également la rotation des pinces 8 de serrage et de la lame 18. Les trois pions 19 cylindriques suivent en effet le tracé imposé par les trois rainures (ou chemins de came) 24, 25 et 26 pratiquées sur les flancs des cames 13, 14 cylindriques. Le déplacement des pions 19 entraînent celui de la pince 16, contre-pince 17 et lame 18 qui alternativement se rapprochent et s'éloignent de la platine 2. Le tracé des rainures 24, 25 et 26 définit précisément les distances relatives entre la pince 16, la contre-pince 17 et la lame 18 et permet de piloter le déplacement en translation de ces éléments de sorte que la pince 16 et la contre-pince 17 se rejoignent transversalement et que la lame 18 assure la découpe du boyau resserré entre les pinces de serrage 8, et traversant ces dernières.

Le fonctionnement de l'appareil 1 est donc le suivant : le boyau rempli de chair à saucisses est disposé à droite de l'appareil. L'utilisateur insère le boyau rempli de chair à travers l'anneau de guidage 103. Ensuite, à l'aide de la manivelle 10, il tourne dans le sens trigonométrique (le sens opposé à celui des aiguilles d'une montre) le système de platine 2 rotative. L'anneau de guidage 103 est incliné selon un angle choisi pour une insertion optimale de la saucisse continue 7 sur la platine 2. Ainsi, la saucisse, non portionnée et non coupée, s'enroule autour de la platine 2 dans la gouttière de guidage 6 et traverse plusieurs ensembles de pinces 8 de serrage (chaque ensemble étant composé d'une pince et d'une contre-pince associées à une lame). Chaque ensemble de pinces 8 de serrage vient, au fur à mesure, repousser la chair, étirer le boyau et enfin découper le boyau. La saucisse est donc portionnée et coupée à une position angulaire déterminée pour tomber ensuite dans un bac situé en dessous de l'appareil 1. On vient ainsi dissocier le mouvement de « repousser la chair » et ensuite de « couper » le boyau resserré passant au milieu des pinces 8 de serrage. Il n'est donc pas nécessaire de torsader la saucisse à ses extrémités.

La figure 4 montre la position de la pince 16, la contre-pince 17 et la lame 18 en position d'ouverture. Les bords avant de la pince 16 et la contre-pince 17 qui sont destinés à rentrer en contact avec la saucisse continue 7 présentent chacun une encoche qui définit une mâchoire 161, 171 de pincement de la saucisse continue 7. Chaque encoche est en forme de guillemets « < » et « > » ou de triangle. La pince 16 et la contre-pince 17 se font face et présentent à l'autre la partie ouverte de leur mâchoire « < » et « >. Lors de la fermeture de la paire de pinces, les deux mâchoires 161, 171 en guillemets forment un passage « < > » du boyau appelé par la suite « diaphragme », se refermant (sa section diminuant) en serrant progressivement la saucisse continue qui est concentrée au centre des mâchoires en « < » et « > ».

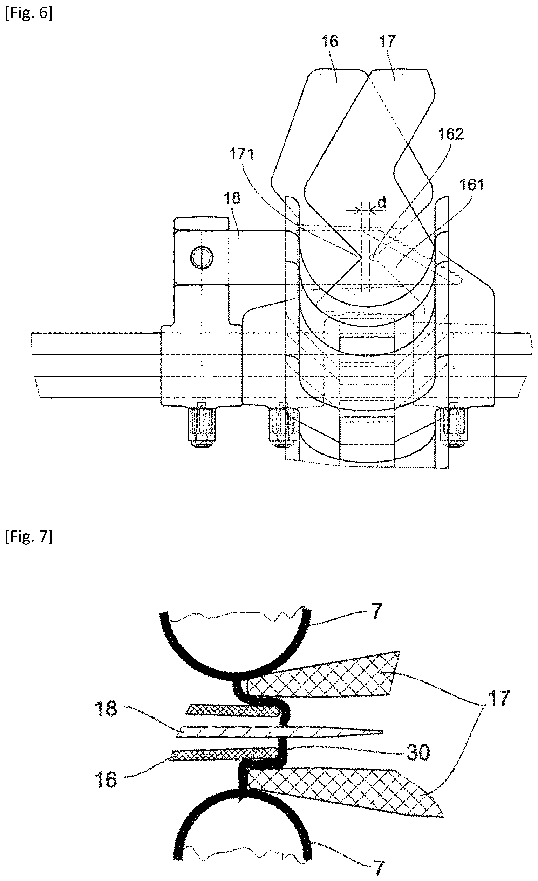

En position de fermeture, les deux mâchoires 161, 171 formées sur le bord avant de la pince 16 et le bord avant de la contre-pince 17 respectivement ménagent un passage de resserrement qui peut être droit/rectiligne ou bien qui prend la forme d'une chicane comprenant deux renvois d'angle de directions opposées (comme illustré sur la figure 7).

Dans la position d'ouverture (figure 4), les mâchoires « < » et « > » sont écartées d'au moins une distance déterminée, et sont situées de part et d'autre de la saucisse continue 7 disposée dans la gouttière de guidage 6.

Dans l'exemple illustré, une échancrure oblongue 162 est pratiquée dans le fond de la mâchoire 161 en forme de guillemet « < » de la pince 16 au niveau du point d'intersection (c'est-à-dire en son centre, au niveau de la pointe du guillemet).

L'échancrure oblongue 162 permet de rassembler tout le boyau en un faible volume lorsque la pince 16 et la contre-pince 17 viennent se superposer. De cette manière, le boyau vidé de son produit alimentaire se positionne parfaitement dans le trou oblong 162 avant d'être coupé.

On note que les pinces 16 et contre-pinces 17 présentent également un chanfrein d'entrée en partie supérieure guidant la saucisse continue 7 entre les mâchoires de la pince 16 et de la contre-pince 17.

Par ailleurs, la contre-pince 17 (pince femelle) est composée de deux parois espacées formant une rainure intérieure (figure 2), qui laisse passer la paroi de la pince 16 (pince mâle) et la lame 18 de façon que, lors de leurs translations vers la position de fermeture, la pince 16 s'imbrique dans la contre-pince 17.

Les deux rainures 24 et 25 des cames 13 et 14 respectivement contrôlent le mouvement des pinces 16 et contre-pinces 17 d'une part, et la rainure 26 contrôle le mouvement des lames 18 d'autre part (comme illustré sur la figure 3). Lorsque, au cours de la rotation de la platine 2, la saucisse continue 7 vient se loger dans le diaphragme de passage du boyau, les rainures 24 et 25 se rapprochent l'une vers l'autre. Dans le même temps, la rainure 26 contrôlant le mouvement des lames se rapproche également de celle de la contre-pince 17 tout en maintenant constante la distance avec celle de la pince 16. Au cours de ce déplacement, les mâchoires des pinces de serrage 8 se resserrent progressivement autour de la saucisse continue et chassent le produit alimentaire de la zone de pincement.

La figure 5 montre l'ensemble en position intermédiaire qui se situe entre la position d'ouverture de la figure 4 et la position de fermeture de la figure 6. Sur cette figure 5, la pince 16 et la contre-pince 17 se chevauchent ou se superposent à la manière d'une cisaille, leurs mâchoires 161, 171 en vis-à-vis forment le diaphragme de passage du boyau dont la section diminue progressivement à mesure que la pince se rapproche de la contre-pince. Ce diaphragme s'étend entre le fond de la mâchoire 161 et le fond de la mâchoire 171 comme cela est visible dans le médaillon de la figure 5. De cette manière, le boyau contenant le produit alimentaire est resserré, et passe au travers du diaphragme alors que tout le produit alimentaire, ou quasiment, a été préalablement chassé de cette portion de la saucisse continue sous l'effet du rapprochement des mâchoires de la pince 16 et de la contre-pince 17.

Dans une configuration particulière de l'appareil 1, après un certain angle de rotation de la platine 2, comme illustrée sur la figure 6, la pince 16, la contre-pince 17 et la lame 18 sont en position de fermeture et se sont déplacées dans les directions indiquées par les flèches de la figure 4.

La figure 7 montre la découpe de la saucisse continue lorsque la pince et la contre-pince sont dans cette position de fermeture. La découpe s'effectue en avançant la lame 18 à l'intérieur de la pince 16 jusqu'à une position où la lame traverse au-moins une partie de la contre-pince 17. Ce mouvement s'effectue en rapprochant la rainure 26 de la rainure 24. Le mouvement de la lame 18 intervient au cours d'un certain nombre de degrés de rotation de la platine 2.

On note que par rapport à la position intermédiaire de la figure 5, la mâchoire 161 de la pince a dépassé la mâchoire 171 de la contre-pince 17. On a référencé « d » la distance entre le fond de la mâchoire 161 de la pince 16 (qui correspond au fond de l'échancrure oblongue 162) et le fond de la mâchoire 171 de la contre-pince 17. Cette distance « d » est négative si bien que le passage de resserrement du boyau dans les pinces de serrage n'est donc plus rectiligne mais présente une forme de chicane comme cela est visible sur la figure 7. Cette figure 7 montre la disposition de la pince 16 et de la contre-pince 17 vue du dessus avec un boyau serré entre ces dernières. De chaque côté, la saucisse continue 7 est visible avec le produit alimentaire à l'intérieur. Le boyau resserré 30 subit un double déplacement transversal à l'axe de la saucisse continue 7 et de ce fait un étirement dans le sens de la longueur. Cet étirement dans le sens de la longueur provoque un rétrécissement du boyau dans le sens transversal qui va permettre de maintenir le produit alimentaire dans la saucisse lorsque celle-ci sera coupée par la lame 18.

La pince 16 s'imbriquant dans la contre-pince 17, le passage du boyau est tel que le boyau subit un premier déplacement perpendiculaire à l'axe de la saucisse continue entre la face interne de la première plaque de la contre-pince 17 et une face externe de la pince 16 dans un premier sens, puis un second déplacement dans un sens opposé au premier entre la face interne de la seconde plaque de la contre-pince 17 et l'autre face externe de la pince 16. Il est à noter qu'entre ces deux déplacements perpendiculaires à l'axe de la saucisse continue, le boyau s'étend sur le rebord de la pince 16 selon un axe parallèle à celui de la saucisse continue. Ces deux déplacements dans des sens opposés augmentent l'étirement de la saucisse continue, et le maintien du produit alimentaire dans le boyau est ainsi amélioré (sa fermeture étant plus efficace).

Le passage de resserrement en forme de chicane s'étend ici entre les rebords de la première plaque et de la seconde plaque de la contre-pince 17.

Après la découpe, on comprend que la rotation de la platine provoque l'ouverture de la pince 16 et de la contre-pince 17 et le retour de la lame 18 à une position de repos. La saucisse ainsi découpée tombe dans le bac de collecte, et peut être conditionnée.

La figure 8 présente en détail la position des pinces et contre-pinces en position de fermeture dans une autre configuration particulière de l'appareil 1. En effet, différentes configurations de l'appareil 1 sont possibles et consistent à ajuster le chevauchement ou la superposition des pinces de serrage 8 en position fermée en fonction de la qualité de fermeture recherchée qui est liée notamment au type de boyau utilisé (boyau naturel ou synthétique). On ajuste ainsi la distance entre le fond de la mâchoire 161 de la pince 16 (qui correspond au fond de l'échancrure oblongue 162) et le fond de la mâchoire 171 de la contre-pince 17. Dans cette configuration de la figure 8, cette distance est référencée « d' » et est négative, avec « d » (pour la position de fermeture de la figure 6) > « d' » (pour la position de fermeture de la figure 8). En d'autres termes, la valeur absolue de « d' » est supérieure à la valeur absolue de « d » de sorte que le chevauchement des pinces illustré la figure 8 est plus élevé que celui de la figure 6.

Dans le mode de réalisation décrit, l'ajustement du chevauchement des pinces 8 de serrage, et donc de la distance entre le fond de la mâchoire 161 de la pince 16 (qui correspond au fond de l'échancrure oblongue 162) et le fond de la mâchoire 171 de la contre-pince 17, est fonction de la position de la came avant 13 sur l'axe 3 de la platine 2.

Dans l'exemple décrit ci-après, trois configurations sont possibles mais il est entendu que deux configurations sont également possibles ou bien quatre configurations ou plus.

Dans l'exemple de mise en œuvre qui est décrit ci-après, il est donc prévu trois positions de la came avant 13 sur l'axe 3 de l'appareil 1 correspondant à chacune à un chevauchement particulier des pinces de serrage en position de fermeture de ces dernières.

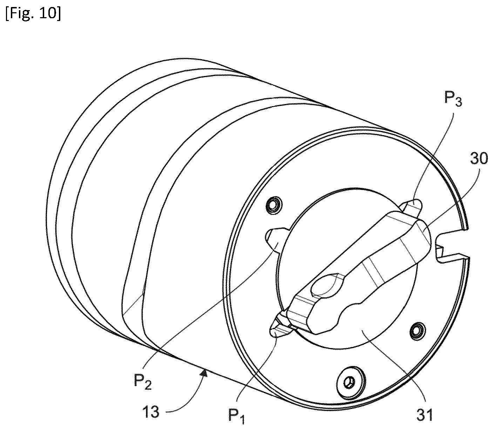

Comme illustré sur la figure 10, une première position P1 de la came avant 13 sur l'axe 3 de l'appareil 1 correspond à un premier chevauchement avec « d » égal à -10mm. Dit autrement, la distance entre le fond 161 de la pince 16 et le fond 171 de la contre-pince 17 est égale à -10mm. Une deuxième position P2 correspond à un deuxième chevauchement avec « d » égal à -6mm et une troisième position P3 correspond à un troisième chevauchement avec « d » égal à +2mm.

D'autres valeurs de « d » sont possibles, les valeurs ci-dessus étant données à titre d'exemple. Elles pourraient ainsi être toutes inférieures à zéro.

Les moyens de réglage comprennent des moyens de commande de la translation des cames le long de l'axe centrale. Ainsi, via les moyens de commande, l'utilisateur de l'appareil 1 peut choisir l'une de ces trois positions P1 à P3 en agissant manuellement sur une partie manipulable (un loquet 30 dans cet exemple) d'un organe de commande 31. Le loquet 30 permet par une translation de déverrouiller la position de la came avant 13 sur l'axe 3, puis par une rotation de déplacer la came avant 13 sur cet axe 3 vers la position P1, P2 ou P3, et de verrouiller la position choisie avec une nouvelle translation du loquet 30. Le loquet 30 peut ainsi prendre une position verrouillée ou déverrouillée, le fonctionnement de l'appareil 1 étant rendu possible lorsque le loquet 30 est en position verrouillée et que la came avant 13 est verrouillée en position sur l'axe 3 (c'est-à-dire une fois la came avant fixe sur l'axe 3). On rappelle que le déplacement des paires de pinces de serrage s'effectue lorsque la platine 2 est en rotation, les cames 13, 14 étant immobiles.

On pourrait dans une variante prévoir un fonctionnement de l'appareil 1 ne nécessitant pas de verrouillage du loquet 30.

La figure 9 est une vue en perspective de la came avant 13 avec une lame 18 et une pince 16 qui coopèrent respectivement avec les chemins de came 26 et 24. Sur sa face circulaire avant, la came avant 13 comprend donc un loquet 30 pivotant porté par l'organe de commande 31 et qui est verrouillé dans une encoche (non visible) correspondant à la position P1 de la came avant 13 sur l'axe 3.

Comme illustré sur la figure 12, l'axe 3 central fixe sur lequel sont montés la came arrière 14, la platine 2 et la came avant 13, porte une clavette 33 coopérant avec la came avant 13 et bloquant en rotation cette dernière.

L'axe 3 central fixe porte à son extrémité située du côté de la came avant 13, l'organe de commande 31 sur lequel est monté le loquet 30. L'organe de commande 31 est une pièce cylindrique qui est logé dans une cavité cylindrique ménagée sur la face avant circulaire (en forme de disque) de la came avant 13.

Trois encoches correspondant aux positions P1, P2 et P3 de la came avant 13 sur l'axe 3 sont ménagés sur la came avant 13 en périphérie de l'organe de commande 30.

La **Fig. 10** montre la came avant 13 seule, le loquet 30 étant en position déverrouillée. Pour déverrouiller le loquet 30 depuis sa position illustrée en **Fig. 9** vers la position illustrée en **Fig. 10****,** le loquet 30 est déplacé en translation hors de l'encoche correspondant à la position P1 vers l'axe longitudinal de la came avant 13 correspondant à l'axe 3 du bâti. Le loquet 30 peut alors être pivoté en regard d'une des deux autres encoches correspondant aux positions P2 et P3 de la came avant 13, puis translaté dans une de ces deux encoches selon la position souhaitée par l'utilisateur.

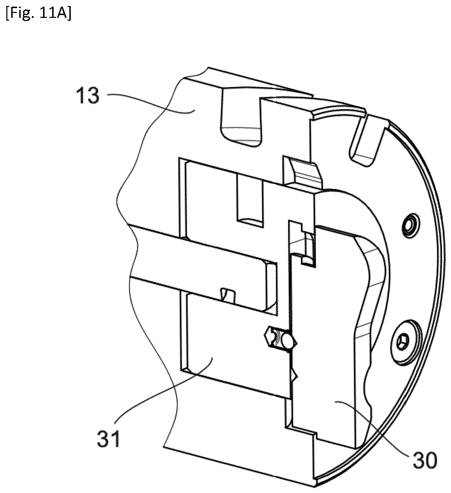

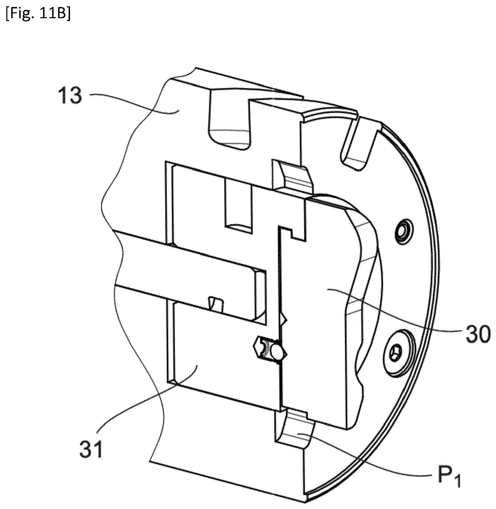

La **Fig. 11A** est une vue en coupe montrant le loquet 30 en position verrouillée, une de ses extrémités étant située dans l'encoche correspondant à la position P1. La **Fig. 11B** est une vue en coupe montrant le loquet 30 en position déverrouillée, une de ses extrémités étant située hors de l'encoche correspondant à la position P1. Ce loquet 30 est donc monté coulissant sur l'organe de commande 31 et est solidaire en rotation avec ce dernier.

Une fois déverrouillé, le déplacement en rotation du loquet 30 provoque la translation et rotation combinées de l'organe de commande 31 par le biais d'une goupille 35 qui se déplace dans une rainure hélicoïdale 34 ménagée sur la périphérie et à l'extrémité de l'axe 3 central fixe (illustré sur la **Fig. 14****)** située du côté de la came avant 13. Le mouvement de translation-rotation combiné de l'organe de commande 31 (représentée par deux flèches sur la **Fig. 13****)** engendre un mouvement de translation de la came avant 13 qui est mobile le long de l'axe 3 (comme représenté par la flèche de la **Fig. 12****).** En effet, la came avant 13 est bloquée en rotation sur l'axe 3 central par la clavette 33, mais elle est libre en translation sur cet axe 3 central. La came avant 13 est reliée à l'organe de commande 31 par un téton 32 solidaire de la came avant 13 et qui ne transmet que le mouvement de translation de l'organe de commande 31. Le téton 32 est logé dans la came avant 13 et son extrémité s'engage dans l'organe de commande 31.

Ce réglage de la came avant 13 sur l'axe 3 central permet à l'utilisateur de choisir le degré de chevauchement de la pince et de la contre-pince de chaque paire de pinces de l'appareil, en fonction de la qualité de fermeture recherchée qui est liée notamment au type de boyau utilisé (boyau naturel ou synthétique).

Ainsi, plus la came avant 13 est déplacée vers la platine 2 en la faisant coulisser sur l'axe 3 central, plus le chevauchement de la pince et de la contre-pince est important, et plus la distance « d » entre le fond 161 de la pince 16 et le fond 171 de la contre-pince 17 est négative. Ceci permet de mieux chasser le produit alimentaire et de créer une longueur plus importante de boyau entièrement dépourvue de produit alimentaire, ou quasiment.

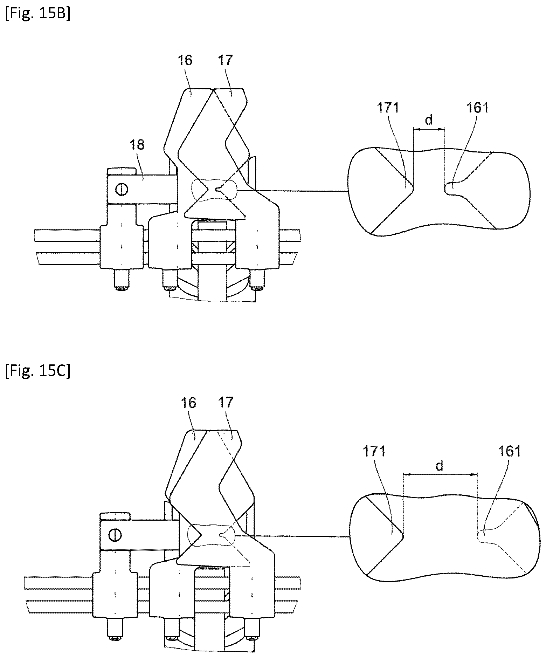

Dans la première position P1 illustrée sur la figure 15C correspondant à une distance « d » égale à -10mm, le fond 161 de la pince 16 a dépassé le fond 171 de la contre-pince 17 et le boyau resserré 30 subit un double déplacement transversal à l'axe de la saucisse continue et de ce fait un étirement dans le sens de la longueur, comme décrit auparavant. Le passage de resserrement du boyau à découper défini par la pince 16 et la contre-pince 17 présente la forme d'une chicane.

Dans la deuxième position P2 illustrée sur la figure 15B correspondant à une distance « d » égale à -6mm, le fond de la pince a dépassé le fond de la contre-pince et le boyau resserré 30 subit un double déplacement transversal à l'axe de la saucisse continue et de ce fait un étirement dans le sens de la longueur, qui est inférieur à l'étirement subi dans la première position P1. Le passage de resserrement du boyau à découper présente la forme d'une chicane. Le passage de resserrement dans cette position P2 est plus court que celui dans la position P1 et ses dimensions sont donc différentes.

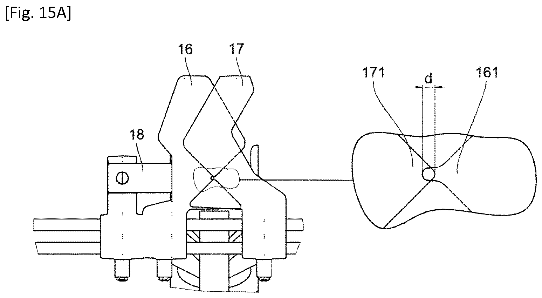

Dans la troisième position P3 illustrée sur la figure 15A correspondant à une distance « d » égale à +2mm, le fond 161 de la pince 16 est disposé en vis-à-vis du fond 171 de la contre-pince 17 (et n'a donc pas dépassé le fond 171 de cette dernière) et le passage de resserrement du boyau entre la pince et la contre-pince est rectiligne/droit de section quasi circulaire. Les dimensions du passage de resserrement en position P3 sont donc différentes de celles en position P1 et P2. Le boyau resserré 30 à découper s'étend sur la figure 15A selon l'axe de la saucisse continue. On comprend que si la distance « d » était égale à +1mm ou + 3mm ou plus, le passage de resserrement du boyau entre la pince et la contre-pince serait rectiligne/droit, mais de section différente (et donc de dimensions différentes).

La longueur du passage de resserrement dès lors que la distance « d » est supérieure à 0 correspond sensiblement à la distance entre les faces externes des deux plaques constituant la contre-pince 17.

La longueur du passage de resserrement dès lors que la distance « d » est inférieure à 0 correspond sensiblement à la longueur de la chicane définie entre les faces externes des deux plaques constituant la contre-pince 17.

Ainsi, dans l'appareil de mise en portions pour la fabrication de saucisses de l'invention, les pinces et contre-pinces opposées sont aptes à être déplacées l'une vers l'autre par des moyens d'actionnement entre une position ouverte et une position fermée dans laquelle elles s'emboîtent pour resserrer et pincer le boyau rempli de produits alimentaires entre leurs mâchoires respectives. En position de fermeture, le boyau traverse les mâchoires et est resserré entre ces dernières sur la longueur d'un passage de resserrement/ contraction et le produit alimentaire est chassé de chaque côté de ce passage de resserrement hors de la longueur de boyau s'étendant dans le passage de resserrement. Ceci permet d'améliorer la fermeture des extrémités de la saucisse fermée et le maintien du produit alimentaire est maintenu à l'intérieur de la saucisse une fois le boyau coupé à l'endroit du resserrement.

Grâce à l'appareil de l'invention, le boyau de porc peut ainsi être plus étiré qu'un boyau végétal (synthétique) qui est différent d'un boyau naturel et pour lequel un réglage de la came avant dans la troisième position P3 est préférable pour éviter un déchirement du boyau.

Une fois le réglage de la came avant 13 effectué, l'utilisateur actionne de façon connue la manivelle 10 de l'appareil 1 et la saucisse continue 7 introduite dans l'appareil 1 est pincée par les paires de pinces 8 de serrage, la pince 16 d'une paire venant se loger dans la contre-pince 17 correspondante de sorte à étirer le boyau sur une certaine longueur et à repousser la chair vers l'extérieur, avant la découpe par la lame associée à la paire de pinces.

Ceci permet une bonne fermeture des saucisses sans nécessiter de torsadage. Cette machine offre une bonne qualité de fabrication de différents types de saucisses avec une mécanique relativement simple.

Dans l'exemple qui vient d'être décrit, seules trois configurations de réglage sont possibles, mais il est envisageable d'avoir un nombre plus important de configurations ou bien uniquement deux configurations.

Selon une mise en œuvre particulière, il peut être prévu une position de réglage tous les mm, la fermeture des pinces étant comprise entre -6mm et +11mm par exemple. Ceci peut être assuré par la mise en œuvre d'une vis sans fin sur laquelle est apte à se déplacer l'une des deux cames.

Selon un mode simple de réalisation particulier, un seul élément de chaque paire de pinces de serrage est animé en translation. Les rainures pratiquées dans les cames sont alors adaptées pour assurer ce mouvement d'une seule des pinces et contre-pinces de chaque paire de pinces de serrage.

Par ailleurs, les formes respectives du fond des pinces et contre-pinces pourraient être différentes de celles illustrées. De la même façon, la structure des parois des pinces et contre-pinces peut être différente de celle décrite en relation avec les figures annexées.

Selon une mise en œuvre particulière de l'invention, les cames avant et arrière sont réglables sur l'axe central de sorte à pouvoir modifier le chevauchement des paires de pinces de serrage.

Selon une autre mise en œuvre particulière de l'invention, seule la came arrière est réglable sur l'axe central de sorte à pouvoir modifier le chevauchement des paires de pinces de serrage, la came avant étant montée fixe sur l'axe central.

L'invention n'est pas limitée aux modes de réalisation qui viennent d'être décrits, mais à l'objet des revendications annexées. En particulier, l'appareil décrit précédemment pourrait produire tout produit alimentaire de forme allongée nécessitant un resserrement et un découpage selon une longueur déterminée.

## Revendications

1. Dispositif (1) de mise en portion de saucisses à partir d'une saucisse continue formée d'un boyau souple contenant un produit alimentaire, tel que de la chair à saucisse, ledit dispositif comprenant un axe central fixe (3) sur lequel est montée une platine (2) rotative autour de laquelle la saucisse continue est destinée à être entraînée, ladite platine (2) étant munie d'une succession de paires de pinces de serrage (8) opposées disposées autour de l'axe central (3) et d'un organe de coupe (18) pour chaque paire de pinces,
les pinces de chaque paire de pinces étant aptes à être déplacées l'une vers l'autre entre une position d'ouverture et une position de fermeture de sorte que, dans la position de fermeture, les pinces se chevauchent et forment un passage de resserrement au travers duquel passe la saucisse continue, le passage de resserrement étant destiné à créer une longueur de boyau entièrement dépourvue de produit alimentaire, ou quasiment, de sorte à maintenir le produit alimentaire à l'intérieur du boyau une fois le boyau tranché par l'organe de coupe au niveau dudit passage de resserrement,
le déplacement des paires de pinces et de l'organe de coupe associé étant assuré par des chemins de came (24, 25, 26) ménagés sur une première et une deuxième cames (13, 14) montées chacune sur l'axe central (3) de part et d'autre de la platine (2),
ledit dispositif étant **caractérisé en ce qu'**il comprend des moyens de réglage de la position d'au moins une desdites cames (13, 14) le long de l'axe central (3) parmi plusieurs positions de sorte à pouvoir modifier l'amplitude de chevauchement des pinces en position de fermeture de ces dernières et les dimensions du passage de resserrement.

2. Dispositif (1) de mise en portion de saucisses selon la revendication 1, **caractérisé en ce que**, dans au moins une position de ladite au moins une desdites cames (13, 14) le long de l'axe central (3), le chevauchement des pinces est tel que le passage de resserrement est droit et maintient le boyau resserré dans l'axe longitudinal de la saucisse continue.

3. Dispositif (1) de mise en portion de saucisses selon la revendication 1 ou 2, **caractérisé en ce que**, dans au moins une position de ladite au moins une desdites cames (13, 14) le long de l'axe central (3), le chevauchement des pinces est tel que le passage de resserrement forme une chicane exerçant sur le boyau un déplacement transversal à l'axe longitudinal de la saucisse continue.

4. Dispositif (1) de mise en portion de saucisses selon l'une des revendications 1 à 3, **caractérisé en ce que** ladite au moins une came réglable (13, 14) est montée fixe en rotation et mobile en translation sur l'axe central (3) et **en ce que** les moyens de réglage comprennent des moyens de commande de la translation de ladite au moins une came sur l'axe central entre au moins deux positions de réglage de la came.

5. Dispositif (1) de mise en portion de saucisses selon la revendication 4, **caractérisé en ce que** les moyens de commande comprennent un organe de commande (31) solidaire de ladite au moins une came réglable (13, 14), ledit organe de commande étant monté mobile en rotation et en translation sur l'axe central, le déplacement en rotation et en translation dudit organe de commande sur l'axe central provoquant le déplacement en translation de la came réglable sur l'axe central.

6. Dispositif (1) de mise en portion de saucisses selon la revendication 5, **caractérisé en ce que** lesdits moyens de commande portent une partie manipulable (30) mobile en rotation entre au moins deux positions angulaires, le déplacement en rotation de la partie manipulable provoquant la translation et la rotation combinées dudit organe de commande (31).

7. Dispositif (1) de mise en portion de saucisses selon la revendication 6, **caractérisé en ce que** lesdits moyens de commande portent une goupille (35) coopérant avec une rainure hélicoïdale ménagée sur la périphérie de l'axe central.

8. Dispositif (1) de mise en portion de saucisses selon la revendication 6 ou 7, **caractérisé en ce que** la partie manipulable est montée mobile en translation sur l'organe de commande entre une position déverrouillée autorisant la rotation de la partie manipulable entre deux positions de réglage de la came sur l'axe central et une position verrouillée bloquant la partie manipulable dans une position de réglage de la came sur l'axe central.

9. Dispositif (1) de mise en portion de saucisses selon la revendication 8, **caractérisé en ce que** la came réglable présente plusieurs encoches de verrouillage de la partie manipulable correspondant chacune à une position de réglage de la came sur l'axe central.

10. Dispositif (1) de mise en portion de saucisses selon l'une des revendications 5 à 9, **caractérisé en ce que** l'organe de commande est une pièce cylindrique logée dans une cavité de forme correspondante ménagée dans la came réglable.

11. Dispositif (1) de mise en portion de saucisses selon l'une des revendications 5 à 10, **caractérisé en ce que** l'organe de commande est solidarisé à la came par un téton de liaison (32).

## Patentansprüche

1. Vorrichtung (1) zum Portionieren von Wurst aus einer Endloswurst, die von einer weichen Hülle gebildet ist, die ein Lebensmittel enthält, etwa Wurstbrät, wobei die Vorrichtung eine feste Mittelachse (3) umfasst, auf der eine Drehplatte (2) montiert ist, um die herum die Endloswurst angetrieben werden soll, wobei die Platte (2) mit aufeinanderfolgenden entgegengesetzt angeordneten Klemmbackenpaaren (8), die um die Mittelachse (3) angeordnet sind, und einem Schneidelement (18) für jedes Klemmbackenpaar versehen ist, wobei die Klemmbacken jedes Klemmbackenpaars geeignet sind, zueinander zwischen einer Öffnungsposition und einer Schließposition verlagert zu werden, so dass in der Schließposition die Klemmbacken einander überlappen und einen schmalen Durchgang bilden, durch den die Endloswurst hindurchgeht, wobei der schmale Durchgang dazu bestimmt ist, eine Hüllenlänge zu erzeugen, die völlig oder gleichsam frei von Lebensmittel ist, um das Lebensmittel innerhalb der Hülle zu halten, wenn die Hülle von dem Schneidelement im Bereich des schmalen Durchgangs geschnitten ist, wobei die Verlagerung der Klemmbackenpaare und des zugehörigen Schneidelements durch Nockenwege (24, 25, 26) gewährleistet ist, die auf einem ersten und einem zweiten Nocken (13, 14), die jeweils auf der Mittelachse (3) beiderseits der Platte (2) montiert sind, vorgesehen sind, wobei die Vorrichtung **dadurch gekennzeichnet ist, dass** sie Mittel zum Einstellen der Position mindestens eines der Nocken (13, 14) entlang der Mittelachse (3) unter mehreren Positionen umfasst, um die Überlappungsamplitude der Klemmbacken in der Schließposition dieser letztgenannten und die Dimensionen des schmalen Durchgangs verändern zu können.

2. Vorrichtung (1) zum Portionieren von Wurst nach Anspruch 1, **dadurch gekennzeichnet, dass** in mindestens einer Position des mindestens einen Nockens (13, 14) entlang der Mittelachse (3) die Überlappung der Klemmbacken derart ist, dass der schmale Durchgang gerade ist und die Hülle in der Längsachse der Endloswurst zusammengezogen hält.

3. Vorrichtung (1) zum Positionieren von Wurst nach Anspruch 1 oder 2, **dadurch gekennzeichnet, dass** in mindestens einer Position des mindestens einen Nockens (13, 14) entlang der Mittelachse (3) die Überlappung der Klemmbacken derart ist, dass der schmale Durchgang eine Weiche bildet, die auf die Hülle einer Verlagerung quer zur Längsachse der Endloswurst ausübt.

4. Vorrichtung (1) zum Portionieren von Wurst nach einem der Ansprüche 1 bis 3, **dadurch gekennzeichnet, dass** der mindestens eine einstellbare Nocken (13, 14) drehfest und in Translation beweglich auf der Mittelachse (3) montiert ist, und dass die Einstellmittel Mittel zum Steuern der Translation des mindestens einen Nockens auf der Mittelachse zwischen mindestens zwei Einstellpositionen des Nockens umfassen.

5. Vorrichtung (1) zum Portionieren von Wurst nach Anspruch 4, **dadurch gekennzeichnet, dass** die Steuermittel ein Steuerelement (31) umfassen, das mit dem mindestens einen einstellbaren Nocken (13, 14) verbunden ist, wobei das Steuerelement in Drehung und in Translation beweglich auf der Mittelachse montiert ist, wobei die Verlagerung des Steuerelements in Drehung und in Translation auf der Mittelachse zur Verlagerung in Translation des einstellbaren Nockens auf der Mittelachse führt.

6. Vorrichtung (1) zum Portionieren von Wurst nach Anspruch 5, **dadurch gekennzeichnet, dass** die Steuermittel ein Betätigungsteil (30) tragen, das zwischen mindestens zwei Winkelpositionen drehbeweglich ist, wobei die Drehverlagerung des Betätigungsteils zur kombinierten Translation und Drehung des Steuerelements (31) führt.

7. Vorrichtung (1) zum Portionieren von Wurst nach Anspruch 6, **dadurch gekennzeichnet, dass** die Steuermittel einen Stift (35) tragen, der mit einer Spiralnut zusammenwirkt, die an der Peripherie der Mittelachse vorgesehen ist.

8. Vorrichtung (1) zum Portionieren von Wurst nach Anspruch 6 oder 7, **dadurch gekennzeichnet, dass** das Betätigungsteil beweglich in Translation auf dem Steuerelement zwischen einer entriegelten Position, die die Drehung des Betätigungsteils zwischen zwei Einstellpositionen des Nockens auf der Mittelachse gestattet, und einer verriegelten Position, die das Betätigungsteil in einer Einstellposition des Nockens auf der Mittelachse feststellt, montiert ist.

9. Vorrichtung (1) zum Portionieren von Wurst nach Anspruch 8, **dadurch gekennzeichnet, dass** der einstellbare Nocken mehrere Kerben zur Verriegelung des Betätigungsteils aufweist, die jeweils einer Einstellposition des Nockens auf der Mittelachse entsprechen.

10. Vorrichtung (1) zum Portionieren von Wurst nach einem der Ansprüche 5 bis 9, **dadurch gekennzeichnet, dass** das Steuerelement ein zylindrisches Stück ist, das in einem Hohlraum von entsprechender Form, der in dem einstellbaren Nocken vorgesehen ist, angeordnet ist.

11. Vorrichtung (1) zum Portionieren von Wurst nach einem der Ansprüche 5 bis 10, **dadurch gekennzeichnet, dass** das Steuerelement mit dem Nocken durch einen Verbindungszapfen (32) verbunden ist.

## Claims

1. A device (1) for portioning sausages from a continuous sausage formed by a flexible sausage casing containing a food product, such as sausage meat, said device comprising a fixed central axis (3) on which a rotatable plate (2) is mounted around which the continuous sausage is intended to be driven, said plate (2) being provided with a series of pairs of opposed gripping tongs (8) arranged around the central axis (3) and a cutting member (18) for each pair of tongs,
the tongs of each pair of tongs being adapted to be moved towards each other between an opening position and a closure position so that, in the closure position, the tongs overlap and form a constriction passage throughout which the continuous sausage passes, the constriction passage being intended to create a sausage casing length completely free, or almost, of food product so as to hold the food product inside the sausage casing once the sausage casing is sliced by the cutting member at the level of said constriction passage,
the movement of the pairs of tongs and the associated cutting member being ensured by cam tracks (24, 25, 26) formed on first and second cams (13, 14) each mounted on the central axis (3) on either side of the plate (2),
said device being **characterised in that** it comprises means for adjusting the position of at least one of said cams (13, 14) along the central axis (3) among several positions so as to be able to modify the amplitude of overlap of the tongs in the closure position thereof and the dimensions of the constriction passage.

2. The sausage portioning device (1) according to claim 1, **characterised in that**, in at least one position of said at least one of said cams (13, 14) along the central axis (3), the overlap of the tongs is such that the constriction passage is straight and holds the sausage casing constricted in the longitudinal axis of the continuous sausage.

3. The sausage portioning device (1) according to claim 1 or 2, **characterised in that**, in at least one position of said at least one of said cams (13, 14) along the central axis (3), the overlap of the tongs is such that the constriction passage forms a baffle exerting on the sausage casing a displacement transverse to the longitudinal axis of the continuous sausage.

4. The sausage portioning device (1) according to one of claims 1 to 3, **characterised in that** said at least one adjustable cam (13, 14) is mounted fixed in rotation and movable in translation on the central axis (3) and **in that** the adjustment means comprise means for controlling the translation of said at least one cam on the central axis between at least two adjustment positions of the cam.

5. The sausage portioning device (1) according to claim 4, **characterised in that** the control means comprise a control member (31) secured to said at least one adjustable cam (13, 14), said control member being mounted movable in rotation and in translation on the central axis, the rotational and translational movement of said control member on the central axis causing the translational movement of the adjustable cam on the central axis.

6. The sausage portioning device (1) according to claim 5, **characterised in that** said control means carry a handleable portion (30) movable in rotation between at least two angular positions, the rotational movement of the handleable portion causing the combined translation and rotation of said control member (31).

7. The sausage portioning device (1) according to claim 6, **characterised in that** said control means carry a pin (35) cooperating with a helical groove formed on the periphery of the central axis.

8. The sausage portioning device (1) according to claim 6 or 7, **characterised in that** the handleable portion is mounted movable in translation on the control member between an unlocked position enabling the rotation of the handleable portion between two adjustment positions of the cam on the central axis and a locked position blocking the handleable portion in an adjustment position of the cam on the central axis.

9. The sausage portioning device (1) according to claim 8, **characterised in that** the adjustable cam has several notches for locking the handleable portion each corresponding to an adjustment position of the cam on the central axis.

10. The sausage portioning device (1) according to one of claims 5 to 9, **characterised in that** the control member is a cylindrical part accommodated in a cavity with a corresponding shape formed in the adjustable cam.

11. The sausage portioning device (1) according to one of claims 5 to 10, **characterised in that** the control member is secured to the cam by a connecting stud (32).
